# EUROPEAN PATENT APPLICATION

(11) **EP 1 351 144 A1**
(43) Date of publication of application: **08.10.2003**
(21) Application number: 02354055.2
(22) Date of filing: 04.04.2002
(51) Int. Cl.: G06F 11/14

(54) **Data processing system and method having an improved device initialisation process**

(71) Applicant: Hewlett-Packard Company, Palo Alto, CA 94304 (US)
(72) Inventor: Neuman, Paul, 38640 Claix (FR); Yann, Stephan, 38130 Echirolles (FR)
(74) Representative: Lloyd, Richard Graham (GB)

(57) **Abstract**

The present invention relates to a data processing system and method and, more particularly, to a data processing system and method having an improved device initialisation process. Conventionally, a BIOS (102), upon initialising a computer system, performs a Power-On Self Test, during which the devices (110-114) contained within the computer system are initialised. This initialisation process takes a relatively long period of time and presents a problem in overcoming the "time to operating system" constraints imposed by some operating system vendors. Furthermore, device initialisation register values may be changed using a BIOS set-up program (126). Changing these device values may, if, for example, IDE, Chipset or Keyboard values are changed, prevent the system from being able to boot correctly and hand over control to the operating system. Suitably, embodiments of the present invention store user defined register values in non-volatile storage (116) and also store a default set of initialisation values (128) that are guaranteed to be able to allow the BIOS (102) to complete the POST and hand over control the operating system (120) if the user defined register values (116) fail to initialise the system. Hence, if the system cannot be initialised correctly using the user-defined initialisation data (116), the default initialisation data (128) is used instead. Therefore, the operation system will always be loaded.

## Description

### Field of the Invention

The present invention relates to a data processing system and method and, more particularly, to a system and method for register initialisation and recovery.

### Background to the Invention

When a computer is powered up, the BIOS performs a number of tasks including the Power-On Self-Test (POST). These tasks are arranged to test and initialise hardware devices and to then boot the operating system from a non-volatile storage media. It is well understood within the art that there are several POST routines that need to be completed successfully to allow the POST phase of initialisation to finish. If some of the more critical POST routines are unsuccessful, a POST Terminal Error is issued and the system is shut down. Before shutting down the system, an error handler issues a beep code that represents a test error point, writes the error to a designated port, attempts to initialise the video and writes the error in the upper left hand corner of the screen.

Although the boot process varies between different computers and different BIOSes, the overall aim is the same, which is to place the computer in a condition where the operating system can be loaded. Upon Power-up, the CPU is arranged to read the address space at FFFF:0000h. This 16 byte address space contains a jump command that informs the processor where, in memory, the BIOS can be found.

Following this boot strapping, the BIOS reads the content of a CMOS RAM. The CMOS RAM contains the system's set-up parameters. The BIOS copies the system set-up parameters into memory.

The boot process is described below in slightly greater detail..

When power is applied to the system and all output voltages from the power supply are acceptable, the power supply will generate a "power good signal" that is received by a motherboard timer. When the motherboard timer receives the "power good signal", it releases the CPU from a forced reset signal to allow it to begin processing instructions.

The first instruction performed by the CPU is to read the content of the above mentioned specific memory address. In the case of an x86 or Pentium processor, this address is FFFF:0000h, which is the last 16 bytes of memory at the end of the first megabyte of memory. The code read by the processor is a jump command informing the processor of the location of the BIOS ROM. A Power-On Self-Test is then performed, which is a series of functions or routines that perform various initialisations and testing of the system hardware. Typically, the BIOS starts with a series of tests of the motherboard hardware. The CPU, maths co-processor, timer IC's DMA controllers and IRQ controllers are tested first. The order of testing varies from manufacturer to manufacturer. Next, the BIOS determines whether a video ROM is located between memory locations C000:000h and C780:000h. If such a video ROM is located, its contents are tested using a corresponding check sum test, which, if successful, allows the BIOS to initialise the video adapter. A video BIOS will then, in turn, initialise itself and assume control to complete the initialisation of the video adapter. The BIOS then scans the memory from C800:000h to DF80:000h in 2KB increments in an attempt to identify any other ROMs that may be installed within the computer. Such ROMs include, for example, network adapter cards or SCSI adapter cards. For each of the adapter ROMs that is located, a check sum test is performed for its content and, if that check sum test is passed, the card is initialised. Control is passed from card to card until the initialisation of all such adapter ROMs has been completed. Upon such completion, the system BIOS resumes control.

However, if any of these tests fail, an error message is output by the system BIOS that identifies the address at which the faulty ROM was detected.

Following the ROM testing, the system BIOS tests the memory at 0000:0427h, which contains a flag to inform the system BIOS whether the system is undergoing a cold or warm boot. As is well known within the art, if the system is undergoing a warm boot, the remaining POST routines are skipped. However, if the system BIOS determines that a cold boot has been instigated, the remaining POST routines are executed.

During the POST a single hexadecimal code is typically written to PORT 80h or PORT 90h. This single hexadecimal code is used to provide an indication of the cause of failure of a BIOS Power-on Self-test.

Once the POST has been completed in an error free manner, the BIOS searches for an operating system. Conventionally, the BIOS looks for a DOS volume boot sector VBS on a floppy drive. If the operating system is not found on the floppy drive, the BIOS searches the system hard drive for a master partition boot sector and loads it into memory at 0000:7C00h.

Having found a master boot sector, the BIOS searches for a volume boot sector on the bootable partition and loads it into memory for testing. If, having tested the volume boot sector, it is found to be unreadable or corrupted, an error message to that effect is output. However, if it is readable and has not been corrupted, the BIOS begins loading the operating system.

The HP BIOS POST Procedures include, for example,
CPU: registers within the CPU tested with data patterns, error flags are set and verified and reset.
ROM BIOS check sum: check sums are performed on high and low BIOS chips.
PIC test: timer channels 1-2 are tested as is the memory refresh signal. The timers are initialised if the tests are passed. The BIOS also tests the 8254 chip.
64K test: walking byte and address collision tests are performed on the first 64K of memory and a check is made for a bad memory chip or address line.
Cache controller: the CPU cache controller and memory are tested.
Video adapter: the video adapter is initialised and internal video adapter diagnostics are performed.
DMA test: byte patterns are written to all DMA controller registers, including page registers and the data written is verified. If the tests are passed, the registers are reset and the DMA controller is initialised.
PIC test: the mask register of the master and slave interrupt controllers are tested. An interrupt is generated and the CPU's response to that interrupt is determined.
Keyboard controller: several tests are performed on the 8042 keyboard controller and a number of interrupt request commands are sent via the 8259PIC.
HP-HIL test: the hardware interrupt level controller is tested with various data patterns that are verified.
CMOS test: check sum test are performed on standard and extended CMOS RAM. A register test and check byte 0D test are performed to determine power status.
Manufacturing loop: searches are performed for a diagnostics tool used in manufacturing and, if found, predetermined tests are run.
Base memory test: the RAM is tested with several bit patterns to determine its correct operation.
Extended memory test: extended memory, if present, is tested. Any faulty bank or bits are identified via the hex code.
RTC tests: the RTC portions of the CMOS chip are tested;
Floppy disc: the floppy disc controllers and the drives are tested;
Maths code processor: the NPU registers and interrupt request functions are tested;
CPU clock test: the interface between the CPU and system is tested at different clock speeds. A test is performed for incorrect clock settings for the system peripherals or a bad CPU or clock generated chip;
Serial and parallel test: the serial and parallel ports are tested and initialised; and
Boot: the BIOS vector table, standard and extended CMOS data areas and any adapter ROMs are initialised and control is then passed to the INT 19 boot loader.

As is well known within the art, users can alter various BIOS parameters, that is, the values used by the BIOS by, for example, pressing F2 or DEL key during reboot. It will also be appreciated that anyone of these alternations may prevent the BIOS from completing successfully the POST.

It will be appreciated that it takes a considerable amount and processing to initialise the registers of the various devices.

It can be appreciated from the above that the BIOS POST routines are extensive and failure of any of those tests may result in the operating system being prevented from being loaded, which would render the computer unusable to a non-technical user.

It is an object of the present invention at least to mitigate some of the problems of the prior art.

### Summary of the Invention

Accordingly, an embodiment of the present invention provides a data processing system comprising a non-volatile data storage medium for storing first initialisation data used to initialise devices within or associated with the data processing system and default initialisation data to initialise at least a subset of those devices; the default initialisation data being sufficient to allow an operating system for the data processing system to be loaded in the event of an unsuccessful device initialisation using the first initialisation data; and
an initialisation manager for detecting an unsuccessful device initialisation and for initialising the subset of devices using the default initialisation data.

Advantageously, in the event that a user has made changes to the BIOS initialisation data of a computer which caused a problem with the computer such as, for example, an inability to complete the Power-On Self-Test or an inability to load the operating system, the default initialisation data is used to initialise the data processing system and the associated devices, which can then allow the operating system to be loaded so that the user can use the computer. In the absence of such a course of action, the computer system may be rendered unusable.

Preferably, embodiments provide a data processing system in which the initialisation manager further comprises means for outputting a message relating to the unsuccessful device initialisation.

Preferably, embodiments provide a data processing system in which the first initialisation data comprises a first portion of initialisation data relating to a first set of the devices and a second portion of initialisation data relating to a second set of the devices. Advantageously, the first set of the devices may include those devices that are necessary for completing the POST or loading the operating system whereas the second set of the devices include devices that are desirable and would not prevent the POST from completing successfully or prevent the operating system from loading.

The initialisation manager further comprises means for outputting a message relating to the unsuccessful device initialisation.

Preferably, embodiments provide a data processing system further comprising a sealed housing containing the devices; the housing being sealed to prevent the devices being changed or replaced. This arrangement is particularly advantageous in conjunction with fixed initialisation data, which, due to the sealed nature of the computer system, will never need to change.

In preferred embodiments, the initialisation manager comprises a BIOS.

A second aspect of the present invention provides a method of configuring a computer system; the computer system comprising a plurality of devices and a non-volatile storage comprising first data for initialising the devices and second data for initialising at least a subset of the devices; the method comprising the steps of accessing the non-volatile storage to retrieve the first data; initialising respective devices of the plurality of devices using the first data; determining that the initialisation of at least one of the devices, using the first data, was unsuccessful and retrieving, from the non-volatile storage, the second data and initialising at least the subset of the devices using the second data.

By using default data which, in some embodiments, corresponds to the last known good configuration of the hardware device registers, the computer system can still be powered up successfully and the problem causing the failure during the POST can be resolved.

Alternatively, embodiments can be realised in which the second data comprises at least one of default initialisation data, for respective devices of the subset of the devices, known to initialise the subset of the devices successfully or initialisation data corresponding to the data used to initialise at least the subset of the devices in a previously successful initialisation.

The default hardware device register values are preferably established by a computer manufacturer and set at the time of manufacture of the computer system.

Preferred embodiments provide a method further comprising the step of establishing that the plurality of devices was successfully initialised using the first data and setting a flag to provide an indication that the initialisation using the first data was successful.

Preferred embodiments provide a method further comprising the step of establishing that the plurality of devices was not initialised successfully using the first data and setting a flag to provide an indication that the initialisation using the first data was unsuccessful.

### Brief Description of the Drawings

Embodiments of the present invention will now be described, by way of example only, with reference to the accompanying drawings in which:
figure 1 illustrates a computer system according to an embodiment;
figure 2 shows a flowchart of the operation of a computer system according to an embodiment.

### Detailed Description of Preferred Embodiments

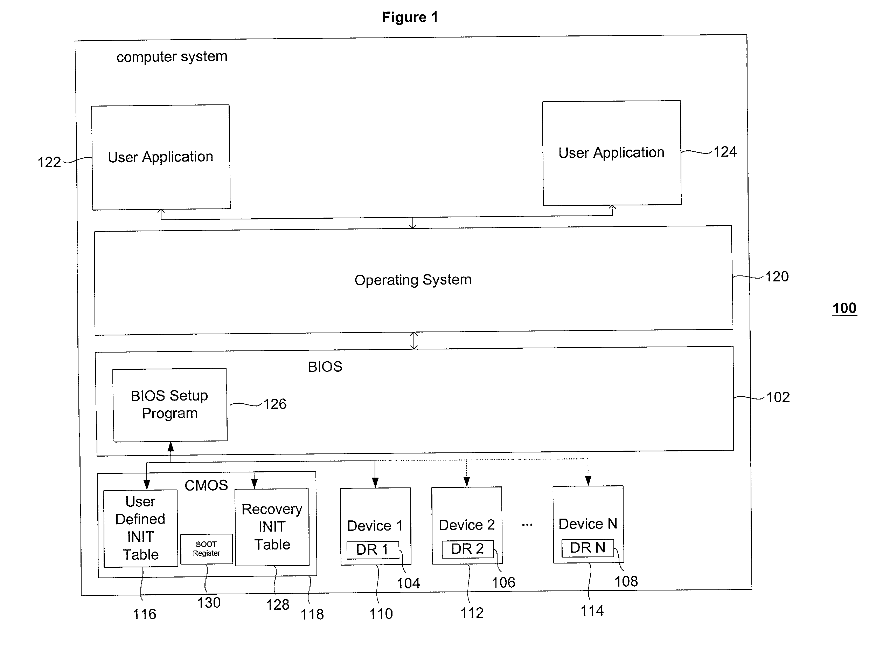

Referring to figure 1, there is shown a computer system 100 which, upon power-up or rebooting, is initialised by a BIOS 102. The BIOS 102 initialises, amongst other things, device registers 104 to 108 of corresponding devices 110 to 114. The initialisation values for those registers 104 to 108 are stored within a user defined INIT table 116. The user defined INIT table 116 is stored within non-volatile storage. In preferred embodiments, the non-volatile storage is the conventional CMOS memory 118. The BIOS 102 identifies the devices 110 to 114, retrieves corresponding register initialisation values from the user defined INIT table 116 and places those values within the appropriate registers 104 to 108 of the devices 110 to 114. This phase of processing by the BIOS 102 is known within the art as the Power-On Self-Test.

Upon completion of the Power-On Self-Test, an operating system 120 is loaded and the BIOS 102 hands-over control to that operating system 120. Once the operating system has been loaded, a user can, for example, then launch various user applications, two examples 122 and 124 of which are illustrated.

From time to time a user may add or remove devices. Any such changes to the configuration of the computer system will require appropriate changes to be made to the values contained within the user defined INIT table 116. Alternatively, or additionally, the user may wish to fine tune the performance of their computer by, for example, varying or changing the values loaded into devices registers 104 to 108 during the Power-On Self-Test. These changes or variations are achieved using a BIOS set-up program 126. It will be appreciated that any incorrect changes may adversely affect the computer system's ability to power-up or boot correctly. Such an incorrect power-up or boot may prevent the BIOS 102 from instigating the loading of the operating system 120 and handing-over control to that operating system. If the operating system cannot be loaded or the BIOS 102 cannot complete the POST to allow control to be handed over to the operating system, the user may be unable to run the various user applications 122 and 124.

Suitably, embodiments of the present invention provide a recovery INIT table 128 to allow the BIOS 102 to initialise the devices 110 to 114 of the computer system 100 using default or back up values that are known to work, that is, when the default values are used the operating system 120 will be able to loaded and control will be handed over to the operating system 120.

The recovery INIT table 128 contains, in one embodiment, default or factory setting hardware device register initialisation values. Alternatively, or additionally, the recovery INIT table 128, in a second embodiment, may contain values for the registers 104 to 108 of devices 110 to 114 which were last known to allow the operating system 120 to be loaded and for control to be handed over to that operating system.

A Boot flag 130 contained within the CMOS 118 is used to determine whether or not, given the values contained within the user defined INIT table 116, control was successfully passed to the operating system 120. The BIOS 102 sets the flag 130 to TRUE when the POST and initialisation of the devices 110 to 114 has been completed successfully and sets the flag 130 to FALSE if the POST and device initialisation failed. The value of the boot flag 130 determines which of the INIT table values are used to initialise the registers 104 to 108 of the hardware devices 110 to 114.

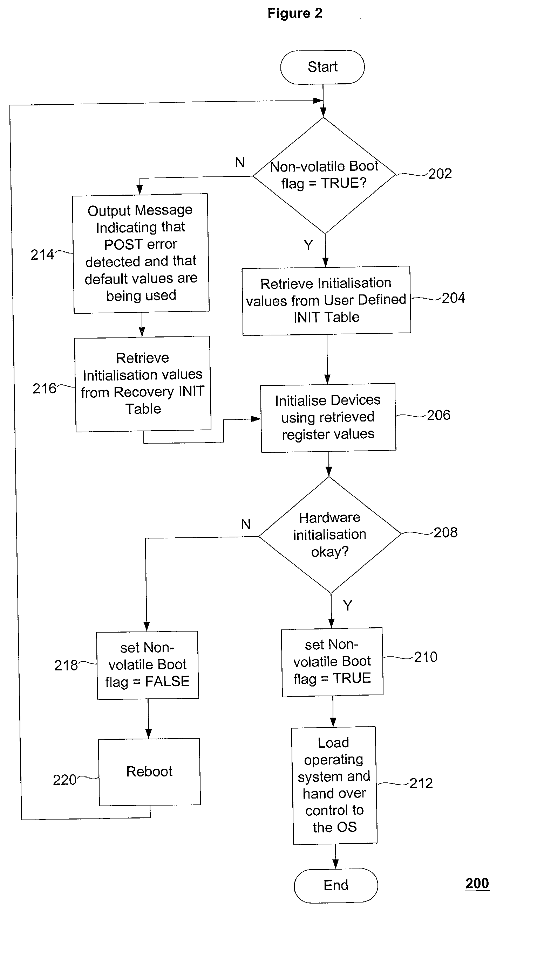

Referring to figure 2, there is shown a flow chart 200 of the processing undertaken by the BIOS 102 according to an embodiment. At step 202, the BIOS determines if the value of the boot flag 130 is set to TRUE. If the boot flag value is set to TRUE, the BIOS 102 retrieves the device initialisation values from the User defined INIT table 116 at step 204. At step 206, the BIOS 102 initialises the devices 110 to 114 using the values retrieved from the user defined INIT table 116.

It is determined, at step 208, whether the hardware initialisation was successful. If so, the boot flag 130 is set to TRUE at step 210 and the operating system 120 is loaded and control is handed over to the operating system 120 at step 212. If it is determined at step 208 that the hardware initialisation was unsuccessful, the boot flag is set to FALSE at step 218 and the system 100 is rebooted at step 220.

If it is determined, at step 202, that the boot flag 130 is FALSE, a message is output, at step 214, which contains an indication that a POST error has been detected and that the default initialisation values will be used to initialise the computer system 100. The default initialisation values are retrieved from the Recovery INIT table 128 at step 216 and processing continues at step 206, where the computer system is initialised using the default initialisation data.

It will be appreciated that the operating system should always be capable of being loaded since the default initialisation values contained within the Recovery INIT table 128 are values that are known to allow initialisation of the devices 110 to 114 and to load and hand over control to the operating system.

Embodiments can be realised in which the Recovery INIT table values, following a recent change to the register values contained within the User-defined INIT table 116 are updated in a step following step 212. In this embodiment, the Recovery INIT table 128 would contain initialisation values of the last known good configuration of the devices 110 to 114. In can be seen that in the above described embodiments, the BIOS 102 functions as an initialisation manager to implement the process described with reference to figure 2.

It will be appreciated that the values selected to form the default initialisation values will vary between BIOS vendors and will be specific to chipsets and the system itself. Any given set of default initialisation values may not be suitable for all computer systems.

It will be appreciated that the present invention is equally applicable to both sealed and non-sealed computer systems. Within sealed systems, the usual searching for installed devices and the retrieval of suitable initialisation values from the CMOS 118 may be avoided since the devices contained within the system are known and cannot change. The same applies to the location within memory of the registers 104 to 108 of those devices. This arrangement can have the advantage of reducing the time taken to perform the POST and initialisation, which, in turn, may allow a reduction in the "time to operating system" to be realised. This arrangement may equally apply to non-sealed or open systems providing the installed devices and register locations are known in advance.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising a non-volatile data storage for storing first initialisation data to initialise devices within or associated with the data processing system and default initialisation data for initialising at least a subset of the devices; the default initialisation data being sufficient to allow an operating system to be loaded in the event of an unsuccessful device initialisation using the first initialisation data; and
an initialisation manager for identifying an unsuccessful device initialisation using the first initialisation data and for initialising the subset of devices using the default initialisation data.

2. A data processing system as claimed in claim 1, in which the first initialisation data comprises a first portion of initialisation data relating to a first set of the devices and a second portion of initialisation data relating to a second set of the devices.

3. A data processing system as claimed in any preceding claim, in which the initialisation manager further comprises means for outputting a message relating to the unsuccessful device initialisation.

4. A data processing system as claimed in any preceding claim, further comprising a sealed housing containing the devices; the housing being sealed to prevent the devices being changed or replaced.

5. A data processing system as claimed in any preceding claim, in which the initialisation manager comprises a BIOS.

6. A method of configuring a computer system; the computer system comprising a plurality of devices and a non-volatile storage comprising at least first data for initialising the devices and second data for initialising at least a subset of the devices; the method comprising the steps of accessing the non-volatile storage to retrieve the first data; initialising respective devices of the plurality of devices using the first data; determining that the initialisation of at least one of the devices, using the first data, was unsuccessful and retrieving, from the non-volatile storage, the second data and initialising at least the subset of the devices using the second data.

7. A method as claimed in claim 6, in which the second data comprises at least one of default initialisation data, for the respective devices of the subset of the devices, known to initialise the subset of the devices successfully or initialisation data corresponding to data used to initialise at least the subset of the devices in a previously successful initialisation.

8. A method as claimed in claim 7, in which the default initialisation data is established by a computer manufacturer and set at the time of manufacture of the computer system.

9. A method as claimed in any of claims 6 to 8, further comprising the step of establishing that the plurality of devices was successfully initialised using the first data and setting a flag to provide an indication that the initialisation using the first data was successful.

10. A method as claimed in any of claims 6 to 9, further comprising the step of establishing that the plurality of devices was initialised unsuccessfully using the first data and setting a flag to provide an indication that the initialisation using the first data was unsuccessful.

11. A system or method as claimed in any preceding claim, in which at least one of the first and second initialisation data comprises, for at least of the devices, an indication of an address within the system of a corresponding initialisation register of the at least one device, together with corresponding initialisation data for the at least one device; and in which the initialisation manager is arranged to write the corresponding initialisation data to the corresponding initialisation register at the address.
